(19) Europäisches Patentamt
European Patent Office
Office européen des brevets

(11) **EP 4 168 204 B1**

(12) **EUROPÄISCHE PATENTSCHRIFT**

(45) Veröffentlichungstag und Bekanntmachung des Hinweises auf die Patenterteilung:
**25.03.2026 Patentblatt 2026/13**

(21) Anmeldenummer: **21736538.6**

(22) Anmeldetag: **21.06.2021**

(51) Internationale Patentklassifikation (IPC):
**B23K 1/00** *(2006.01)* **B23K 1/20** *(2006.01)*
**B23K 101/34** *(2006.01)*

(52) Gemeinsame Patentklassifikation (CPC):
**B23K 1/0004; B23K 1/20;** B23K 2101/34

(86) Internationale Anmeldenummer:
**PCT/EP2021/066729**

(87) Internationale Veröffentlichungsnummer:
**WO 2021/259817 (30.12.2021 Gazette 2021/52)**

(54) **VERFAHREN ZUR HERSTELLUNG EINER SPALTFREIEN- UND KRAFTSCHLÜSSIGEN VERBINDUNG**

METHOD FOR PRODUCING A GAP-FREE AND FORCE-FITTING CONNECTION

PROCÉDÉ DE RÉALISATION D'UNE CONNEXION SANS ESPACE PAR ADHÉRENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.06.2020 DE 102020116474**

(43) Veröffentlichungstag der Anmeldung:
**26.04.2023 Patentblatt 2023/17**

(73) Patentinhaber: **Strunk Connect Automated Solutions GmbH & Co. KG
57548 Kirchen-Freusburg (DE)**

(72) Erfinder: **SCHILLINGER, Jakob
85080 Gaimersheim (DE)**

(74) Vertreter: **Klüppel, Walter
Patentanwaltskanzlei
Hammerstraße 2
57072 Siegen (DE)**

(56) Entgegenhaltungen:
EP-B1- 1 286 803        DD-A1- 274 775
DE-A1- 10 315 976       DE-A1- 3 107 665
DE-C1- 19 512 089       US-A1- 2011 303 736

## Beschreibung

Die Erfindung betrifft ein Verfahren zur Herstellung einer spaltfreien und kraftschlüssigen Verbindung zwischen mindestens drei metallischen Einzelkomponenten. Derartige Verfahren dienen beispielsweise dem Verbinden von Segmenten oder Lamellen elektrischer, elektromechanischer oder elektrochemischer Baugruppen wie Blechpaketen für Statoren oder Rotoren oder elektrochemischen Zellen.

Es sind verschiedene Verfahren für die Herstellung einer kraftschlüssigen Verbindung allgemein bekannt. Beim Laserschweißen erfolgt ein Nahtschweißen an einer Stoßkante. Das Aufschmelzen des Materials führt jedoch zu hohem Temperatureintrag und damit zu einer metallurgischen Veränderung des Basismaterials. Der Schweißwulst muss in einem zusätzlichen, getrennten Arbeitsschritt entfernt werden.

Eine erforderliche gleichbleibende hohe Qualität ist beim Ultraschallschweißen wegen der großen und oftmals unsymmetrischen oder gekrümmten Oberfläche nicht erreichbar. Das Kleben bedingt einen aufwendigen Prozess wegen einer Oberflächenreinigung, Dispensen, Montieren und Aushärten. Außerdem ergeben sich Einschränkungen bei der Nutzungstemperatur und der Festigkeit.

Das lotfreie Aufschmelzen der Basismaterialien durch externe Wärmezufuhr mittels induktiver oder ohmscher Quellen beim Widerstandsschweißen führt zu sehr hohem Temperatureintrag und damit zu metallurgischen und mechanischen Veränderungen der Basismaterialien.

Beim Weichlöten erfordert zinnhaltiges Weich-Lot eine niedrige Schmelztemperatur des Lotes. Geringe Festigkeit und niedrige Nutzungstemperatur beeinträchtigen jedoch die Verwendbarkeit.

Beim Hartlöten eingesetztes eutektisches Hochtemperatur-Lot schmilzt bei Temperaturen weit unter dem Schmelzpunkt der zu verbindenden Einzelkomponenten. Bevorzugte Energiezufuhr erfolgt durch Induktion oder Joulesche, ohmsche Erwärmung. Hartlöten ist die bevorzugte Variante, da es serienerprobt ist, flexibel eingesetzt werden kann und die geforderte Verbindungsfestigkeit erfüllt. Allerdings bildet das Hartlot einen dünnen, undefinierten Spalt zwischen den zu verbindenden Einzelkomponenten. Als Hartlot kann beispielsweise Silfos, eine Silber-Hartlöt-Legierung, Verwendung finden.

Aus der DE 195 12 089 C1 ist bekannt, in einem Hohlraum zwischen den zu verbindenden umformbaren Blechbauteilen ein Lotteil einzubringen. Zur Verbindung werden durch hohen Druck die zu verbindenden Blechbauteile umgeformt und das Lotteil durch elektrische Widerstanderwärmung mittels angelegter Elektroden in einen schmelzflüssigen Zustand überführt. Durch die Umformvorgänge entstehen nicht definierte Oberflächen an den zu verbindenden Blechbauteilen. Ein spaltfreies Zusammenfügen ist damit aber nicht zu erreichen.

Die US 2019/0363313 A1 offenbart zwar einen Reinigungsvorgang im Bereich der zu verlötenden Materialien vor dem eigentlichen Lötvorgang, eine spaltfreie Verbindung wird hier jedoch nicht angeregt.

Die DD 274 775 A1 offenbart zwar bereits Lötflächen mit Ausnehmungen. Diese Rillen oder Lötdeponien werden jedoch nach erfolgtem Verlöten vollständig vom Lot ausgefüllt. Ein definiertes spaltfreies Zusammenfügen ist damit ebenfalls nicht möglich.

Eine weitere ähnliche Lösung zeigt die DE 31 07 665 A1.

Die Erfindung geht von der Aufgabe aus, bei einem Verfahren zur Herstellung einer spaltfreien, dichten, chemisch beständigen und kraftschlüssigen Verbindung der eingangs genannten Art eine mechanisch feste und eng tolerierte Verbindung von Einzelkomponenten ohne Krümmungen, Verbiegungen oder Verformungen zu ermöglichen.

Die Aufgabe wird erfindungsgemäß für ein Verfahren der eingangs genannten Art durch die im Patentanspruch 1 angegebenen Merkmale gelöst. Vorteilhafte Ausbildungen sind in den abhängigen Patentansprüchen angegeben.

Mittels der Abfolge der Verfahrensschritte gemäß Anspruch 1 erhält man auf einfache Weise eine kraftschlüssige, flüssigkeits- und gasdichte Verbindung zwischen zwei oder mehreren Metallflächen. Außerdem kann durch Nutzung erprobter Technologien durch Kombination von Laser und ohmsche Erwärmung Serienequipment verwendet werden. Anstelle der in Schritt S1 gemäß Anspruch 1 erwähnten Abtragungsvorgänge können die Vertiefungen auch schon beim Gießen der Einzelkomponenten erstellt werden.

Es hat sich als vorteilhaft erwiesen, dass die Bearbeitung der Lötzonen gemäß Schritt S1 gemäß Anspruch 1 und/oder bei der Bearbeitung der Oberfläche der Einzelkomponenten gemäß Anspruch 1 mittels eines Lasers erfolgt. Durch die lasergestützte Gravur der Vertiefungen und anschließende Oberflächenvorbehandlung und -reinigung können diese Verfahrensschritte in einem Prozess abgearbeitet werden.

Alternativ kann die Bearbeitung der Lötzonen gemäß Schritt S1 gemäß Anspruch 1 und/oder bei der Bearbeitung der Oberfläche der Einzelkomponenten gemäß Anspruch 1 erfindungsgemäß auch mittels einer mechanischen Vorrichtung erfolgen oder durch selektives galvanisches Ätzen. Beim mechanischen Abtragen oder beim selektiven galvanischen Ätzen kann dabei in vorteilhafter Weise auf die abgetragene Fläche eine dünne Schicht eines lötfähigen Materials aufgetragen werden, so dass anschließend darauf optimal gelötet werden kann.

Es hat sich bewährt, dass die Bearbeitung der Lötzonen gemäß Schritt S1 gemäß Anspruch 1 und/oder bei der Bearbeitung der Oberfläche der Einzelkomponenten gemäß Anspruch 1 einseitig oder beidseitig erfolgt.

Nachahmenswert ist, dass die Erzeugung von Vertiefungen im Bereich der Lötzonen gemäß Schritt S1 gemäß Anspruch 1 im Grabendesign und/oder Rillendesign erfolgt.

Vorteilhaft ist, dass die Vertiefungen im Rillendesign Rillen und Stege aufweisen, die gegenüberliegend ggf. versetzt angeordnet sind.

In vorteilhafter Weise können die Vertiefungen im Rillendesign Rillen und Stege unterschiedlicher Breite und/oder Tiefe aufweisen.

Bemerkenswert ist, dass das Aufbringen des Hartlotteiles gemäß Schritt S2 gemäß Anspruch 1 mittels Siebdruckes, Schablonendruckes oder Dispensers oder als Formteil erfolgen kann.

Es hat sich als vorteilhaft erwiesen, dass auf den Stegen querverlaufende gelaserte Furchen zur besseren Schmelzeverteilung vorgesehen sind.

Es hat sich bewährt, dass Flächenverhältnis zwischen Einzelkomponenten und Hartlotteil derart gewählt wird, dass beim Hartlöten die Temperatur des Basismaterial der Einzelkomponenten unter der für die Applikation kritischen Schwelle bleibt, so dass z.B. keine Verformung der Basismaterialien entstehen.

In vorteilhafter Weise können die Vertiefungen axial, konzentrisch und/oder radial angeordnet sein.

Nachahmenswert ist, dass die Befestigung des Hartlotteils durch Quetschung des Lotüberstandes in seitliche Überlaufkanäle erfolgt.

Die Erfindung ist nachfolgend anhand von in der Zeichnung dargestellten Ausführungsbeispielen näher erläutert. Es zeigen:

Figur 1          Anordnung zur Erstellung erfindungsgemäßer spaltfreier Lötverbindungen zwischen mehreren ausgerichteten Metallkomponenten,

Figur 2          eine vergrößerte Darstellung des Details D der Figur 1,

Figur 3          eine um Strompfade erweiterte Darstellung der Figur 2,

Figuren 4 und 5          eine Lötzone zur Verarbeitung eines Komponentenstapels nach dem Grabendesign,

Figuren 6 bis 9          Lötzonen zur Verarbeitung eines Komponentenstapels nach dem Rillendesign,

Figuren 10 bis 13          Lötzonen zur koaxialen Verarbeitung eines Komponentenstapels und

Figuren 14 und 15          Lötzonen zur radialen Verarbeitung eines Komponentenstapels.

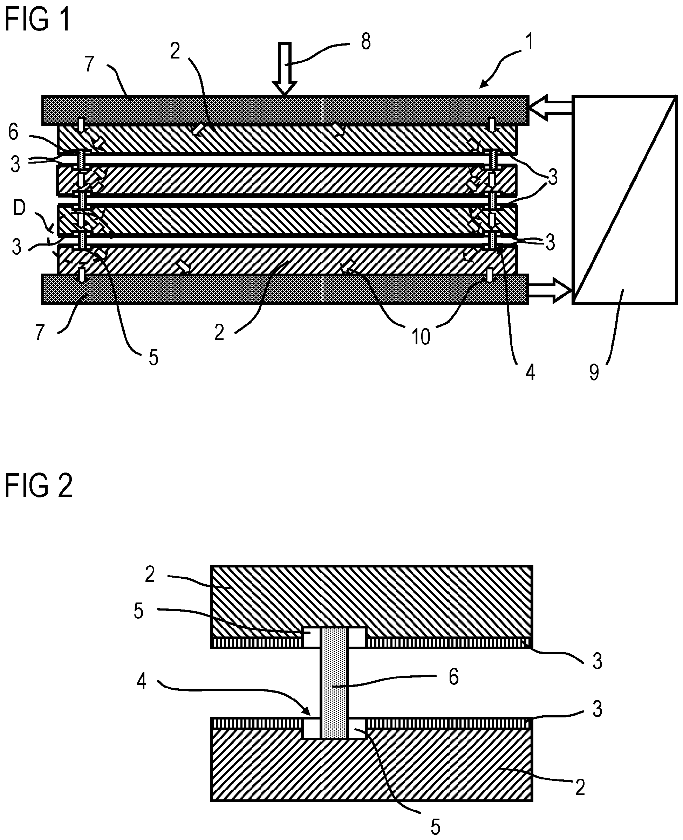

In der Figur 1 ist ein Komponentenstapel 1 aus vier metallischen Einzelkomponenten 2 dargestellt, die mit Oberflächenschichten 3, beispielsweise Oberflächenkontaminationen oder Schutzschichten, versehen sind. Im Bereich der herzustellenden Lötverbindungen, der Lötzonen 4, wurden diese Oberflächenschichten 3 entfernt, wie nachfolgend noch beschrieben wird. In diesen Lötzonen 4 wurden weiterhin Vertiefungen 5 in die Einzelkomponenten 2 eingebracht. Zwischen den Einzelkomponenten 2 sind Hartlotteile 6 in den Vertiefungen 5 angeordnet, die die Einzelkomponenten 2 auf Abstand halten. Eine derartige Lötzone 4 ist als Detail D in der Figur 2 vergrößert dargestellt.

Der Komponentenstapel 1 wird gemäß Figur 1 über zwei Elektroden 7 in der gewünschten Lage zusammengehalten. Die Elektroden 7 dienen auch zur elektrischen Kontaktierung für die geregelte elektrische Energiequelle 9, die strom-, spannungs- oder leistungsgeregelt sein kann. In den Lötzonen 4, die beispielsweise durch einen Laser bearbeitet wurden, befinden sich die Hartlotteile 6. Im Basismaterial der Einzelkomponenten 2 verteilt sich der über die Elektroden 7 eingespeiste Strom I über die ganze Querschnittsfläche A des Basismaterials. In den Hartlotteilen 6 wird der Strom nur über den schmalen Lotquerschnitt geführt. Dies wird durch die Strompfade 10 verdeutlicht.

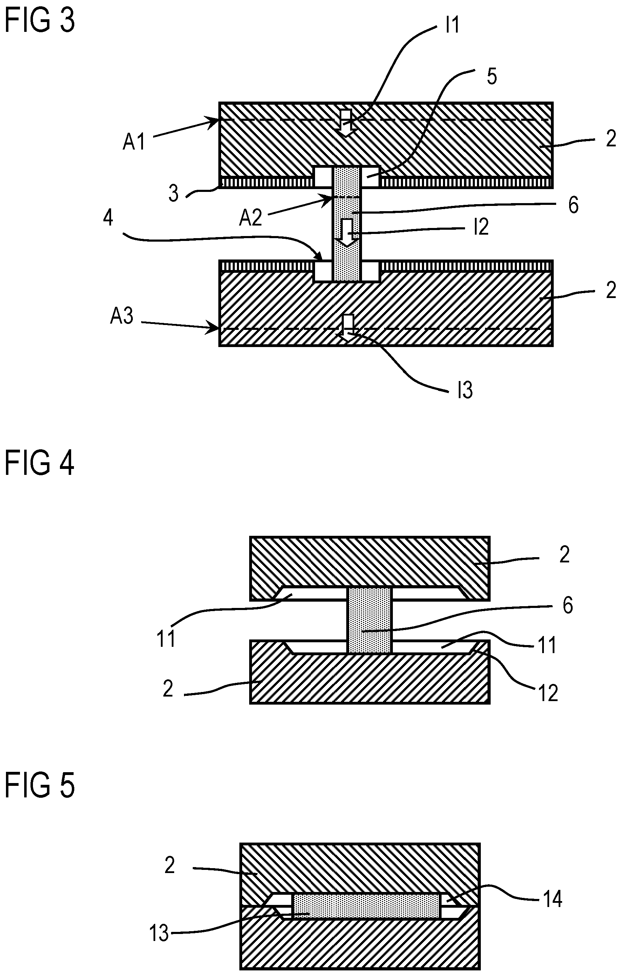

In der Figur 3 ist nun das Detail D mit den beschrifteten Strompfaden 10 vergrößert wiedergegeben. Über die Querschnittsfläche A1 der oberen Einzelkomponente 2 fließt ein Strom I1. In dem Hartlotteil 6 mit einem Querschnitt A2 fließt ein Strom I2. Durch die Querschnittsfläche A3 der unteren Einzelkomponente 2 fließt ein Strom I3.

Wie aus der Erwärmungsformel hervorgeht, ist dieses Flächen-Verhältnis neben den Materialeigenschaften Hx die entscheidende Größe für die unterschiedliche Erwärmung der Basismaterialien der Einzelkomponenten 2 und des Hartlotes 6. Eine vollflächige Lotfolie würde folglich einerseits eine unerwünscht starke Erwärmung des Basismaterials und andererseits einen sehr hohen Strom erforderlich machen.

In typischen Applikationen wird ein sehr kurzer und hoher Stromimpuls verwendet. Damit erreicht man eine schnelle Erwärmung der Lötzonen 4, die zum Aufschmelzen der Hartlotteile 6 und Beloten führt, bevor die Wärme über das Basismaterial der Einzelkomponenten 2 und die Elektroden 7 wieder abfließt.

Die Erwärmungsformel "Erwärmung Delta Tx" beschreibt die Abhängigkeit der Erwärmung einer beliebigen Metallschicht in Abhängigkeit des durchfließenden Stromes Ix, des Leitungsquerschnittes Ax, der Dauer tx und des Materialfaktors Hx. Da der Materialfaktor durch die Materialauswahl vorgegeben ist, der Strom möglichst hoch und die Dauer möglichst kurz sein sollen, kann durch die Kontaktierfläche des Hartlotes eine einfache Optimierung erreicht werden. Die reproduzierbare Breite der Rillen 15 und Stege 16 ist für die Wiederholbarkeit des Schweißvorganges von großer Bedeutung. Ohne diese Begrenzungen breitet sich das Hartlot mehr oder weniger undefiniert aus und der Schweißvorgang ist mit einer großen Streubreite, wie aus dem genannten Stand der Technik bekannt, belegt.

$$\text{Erwärmung Delta } Tx = Ix^2 * Hx * tx \ / \ Ax^2$$

Die Formel für das Verhältnis der Erwärmung zweier Materialien zeigt dies. In der gegebenen Paarung würde bei einer vollflächigen Lotfolie das Flächenverhältnis 1:1 betragen. Also würde bei einer Lotschmelze-Temperatur von 800°C die Temperatur des Basismaterials auf mindestens 400°C ansteigen. Bei einem Flächenverhältnis von 1:10 bleibt das Basismaterial auf Raumtemperatur. Es wird sich wegen des Wärmeflusses aus der Lötzone erwärmen, aber im zulässigen Bereich.

$$\text{Verhältnis Delta } T = ( I1^2 * H1 * t \ / \ A1^2 ) / ( I2^2 * H2 * t \ / \ A2^2 )$$

$$= ( H1 * A2^2 ) \ / \ ( H2 * A1^2 )$$

$$= 207{:}1 \ \ ( \text{d.h. Lotmaterial erwärmt sich } {\sim}200 \text{ mal stärker als Basismaterial} )$$

für A1 / A2 = 10 , H1 = 28 (Eisen) , H2 = 58 (Silfos)
mit

A1 = Fläche Basismaterial oben
A2 = Fläche Hartlotteil 6
A3 = Fläche Basismaterial unten
I1 = Strom durch Basismaterial oben
H1 = Koeffizienten Basismaterial oben
I3 = Strom durch Basismaterial unten
I2 = Strom durch Hartlotteil 6
H2 = Koeffizienten Hartlotteil 6
H3 = Koeffizienten Basismaterial unten

Magnetische Werkstoffe verlieren bei Überschreiten der Curie-Temperatur bestimmte physikalische Eigenschaften. Ab ca. 400°C setzt die Verzunderung ($Fe_2O_3$) von Eisenwerkstoffen ein. Noch höhere Temperaturen führen zu Gefügeänderungen der Werkstoffe.

Die Einzelkomponenten 2 können sequentiell oder parallel gelötet werden. Dies bedeutet, dass der Komponentenstapel 1 Komponente für Komponente aufgebaut wird, oder dass der Komponentenstapel 1 erstellt und in einem einzigen Schweißvorgang gleichzeitig verbunden wird, wie dies in der Figur 1 gezeigt wird.

Neben der beidseitigen Laserbearbeitung sind auch weitere Kombinationen, wie einseitige Gravur und/oder Reinigung möglich. Bei einem einseitigen Reinigungsschritt ist jedoch eine Qualitätseinbuße zu erwarten.

Die Oberfläche der zu verbindenden Einzelkomponenten 2 ist, bedingt durch die vorhergehenden Prozesse, mit dünnen Oberflächenschichten 3 versehen, einer oft nur mit speziellen Analyseverfahren feststellbaren Kontaminationsschicht. Neben den bekannten Oxidschichten sind auch Schichten oder Flecken mit sulfidischen, kohlenstoffhaltigen und/oder halogenhaltigen Verbindungen vorzufinden. In manchen Applikationen werden die Oberflächenschichten 3 der Einzelkomponenten 2 mit Nitridschichten oder Lack/Klebe-Schichten gezielt geschützt. Alle diese Schichten beeinflussen die Lötbarkeit negativ. Die Verwendung von Fluxern ist nur bei Oxiden zielführend.

Neben rein mechanischen Verfahren für die Vorbehandlung empfiehlt sich hier die Anwendung eines Lasers. Mit einem Laser kann mit einem Prozessschritt in den Lötzonen 4 die Reinigung der Oberflächenschichten 3, die Gravur der Vertiefungen 5 und die Beschriftung vorgenommen werden.

Für die Oberflächenbearbeitung von Metallen sind Wellenlängen erforderlich, die zu einer teilweisen oder vollständigen Absorption des Laser-Lichtes im Basismaterial führen. Grundsätzlich sind kurzwellige Strahlungen besser geeignet als langwellige. Aber bei Eisen als Basismaterial der Komponenten ist auch ein $CO_2$-Laser mit ca. 10μm

Wellenlänge gut geeignet.

Die Strahlleistung kann kontinuierlich oder gepulst anliegen. Insgesamt spielen die Wellenlänge, die Laserimpulsdauer, die Peakleistung, der Strahlquerschnitt, die Strahlbewegungsgeschwindigkeit und die Raleigh-Länge eine wichtige Rolle für die Dimensionierung.

Abhängig von diesen Parametern können die Oberflächenschichten 3 der Einzelkomponenten 2 gereinigt, aufgeraut und/oder graviert werden. Dabei wird, um eine spaltfreie Lötverbindung zu erzielen, die Querschnittsfläche der Vertiefungen 5, der Gravur, so gewählt werden, dass das aufgeschmolzene Lot vollständig darin Platz findet.

Zusammengefasst erreicht man durch die vorhergehende Laserbearbeitung der Lötzonen 4 folgende Vorteile:

- Entfernung der Oberflächenkontaminationen oder Schutzschichten,
- Steuerung der Ausbreitungsrichtung der Lotschmelze,
- Vollständige Aufnahme des aufgeschmolzenen Lotes in den Gräben oder Rillen,
- Reproduzierbare Oberflächen und damit gleiche Lötbedingungen und
- Definierte Kontaktierfläche durch die Ausformung der Stege.

Die Dimensionierung der Breite und Tiefe des Laserabtrags zur Erstellung der Vertiefungen 5 wird so berechnet, dass das Lotmaterial vollständig in den ein- oder beidseitigen Vertiefungen 5 Platz findet. Nur ein kleiner umlaufender Saum bildet das Toleranzvolumen oder den Toleranzraum 17 für die Kompensation von Abmessungsschwankungen des Lotmaterials und der Gräben bzw. Rillen. Die Höhe des Lotmaterials wird so gewählt, dass die beiden Komponenten hinreichend beabstandet sind, sodass ein Nebenschluss während der Ausbildung der Schmelzephase ausgeschlossen werden kann. Die Erwärmung findet also, wie bereits ausgeführt, im gesamten Lotdraht und komponentenseitig in den Vertiefungen 5 der Lötzonen 4 statt.

Typischerweise kann die Gravur als Graben oder als Rillenzone ausgeführt werden. Das Rillendesign bietet über die Seitenwand der Stege eine vergrößerte Benetzungszone und lässt deshalb höhere Zug- und Scherkräfte erwarten.

Da beim Rillendesign der Stromfluss über die genau gefertigten Stege erfolgt, ist die Kontaktfläche sehr genau und reproduzierbar definiert. Damit ist die Wärmeentwicklung, die von der Kontaktfläche abhängt, auch sehr genau definiert und reproduzierbar.

Die Schräge wird durch Reduzierung des Laser-Energieeintrags erzeugt. Deshalb ist dort signifikant weniger Schweißwulst zu erwarten. Dieser entsteht als Schmelzerest beim Entfernen des Basismaterials der Komponente.

Dem Stand der Technik entsprechend ist ein Ultrakurzimpuls-Laser mit Impulsbreiten im Bereich von ps (Picosekunden) oder fs (Femtosekunden) zu verwenden.

Der Auftrag des Hartlotes kann technisch als Formteil mittels eines Handlingsystems oder als Paste oder Pulver mittels eines Dispensers, Schablonendruckers oder Siebdruckers erfolgen. Durch Zugabe von Fluxermaterial kann eine verbesserte Lötbarkeit erzielt werden. Vorteilhaft ist es, wenn das Formteil in einem separaten Arbeitsschritt so in den Graben/Rille gedrückt wird, dass er sich dort formschlüssig verankert und so bei den Folgearbeitsschritten nicht mehr verschoben werden kann. Auch ein punktuelles Anschweißen des Lotes auf dem Basismaterial in einem separaten Arbeitsschritt ist geeignet. Die Lage des Formteils während des Schweißvorganges ist für die Qualität mitentscheidend. Zur Absicherung kann das Formteil mittels eines Scanners oder Kamerasystems inline überwacht werden.

Durch die Positionierung der Stege und der Rillen wird während des Aufschmelzvorganges des Lotes die Schmelze bewegt und unter Kraftaufbringung in die Rillen gedrückt. Dies verstärkt die metallurgische Verbindung in der Interface-Zone und damit der Festigkeit.

Querverlaufende Kanäle zwischen den Rillen ermöglichen das Entweichen von Prozessgasen und eingeschlossener Luft.

Für die Herstellung der Vertiefungen 5 sind das Grabendesign und das Rillendesign geeignet. Anhand der Figuren 4 und 5 wird nun das Grabendesign der Vertiefungen 5 näher erläutert.

Ein breiter Graben 11 in der unteren Einzelkomponente 2 dient zur Aufnahme des Lotes. Das Hartlotteil 6 wird auf den Boden des unteren Grabens 11 gelegt. Das Volumen der Hartlotteile 6 ist kleiner als das gesamte Volumen der Gräben 11. Da auch der Querschnitt des Hartlotteils 6 kleiner ist als der Querschnitt der Gräben 11 gewählt ist steht das Hartlotteil 6 über die untere Einzelkomponente 2 nach oben vor. Die obere Einzelkomponente 2 wird so auf die Anordnung gelegt, dass eine Kontaktierung nur im Bereich der Hartlotteile 6 und der Gräben 11 erfolgt. Eine seitliche Schräge 12 des Grabens 11 verhindert einen Schmelzewulst, falls beim Abtrag das Material nicht vollständig verdampft. Nach Beendigung des Lötvorgangs liegen beide Einzelkomponenten 2 gemäß Figur 5 spaltfrei aufeinander. In den Gräben 11 hat sich eine Interfacezone 13 zwischen Lot und Basismaterial gebildet. Seitliche lotfreie Toleranzräume 14 dienen zum Volumenausgleich des Lotes. Lediglich die Oberfläche im Bereich des Bodens des Grabens 11 wird benetzt. Der Graben 11 kann einseitig nur an einer Einzelkomponente 2 oder wie dargestellt beidseitig ausgeführt sein.

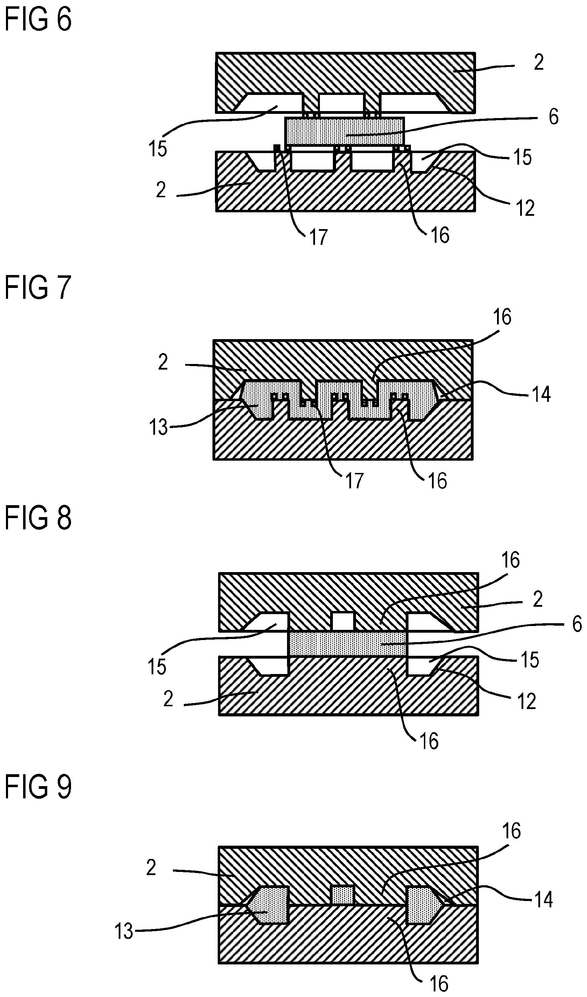

In den Figuren 6 bis 9 werden verschiedene Ausführungen des Rillendesigns dargestellt. Die Figur 6 zeigt ein Rillendesign mit versetzten Stegen vor dem Löten. Die Einzelkomponenten 2 sind im Bereich der Lötzonen mit mehreren Rillen 15 zur Aufnahme des Lotes versehen, die durch Stege 16 voneinander getrennt sind. Mindestens zwei Rillen 15 müssen seitlich als Toleranzraum 14 für die Lotschmelze vorgesehen sein. Der Toleranzraum 14 dient zur Aufnahme des Lotes, das nicht zur Füllung der Rillen 15 benötigt wird. Die seitliche Schräge 12 der äußeren Rillen 15 verhindert einen Schmelzewulst, falls Basismaterial beim Abtragen nicht vollständig verdampfen sollte.

Auf den Stegen 16 können durch Wulste 17 quer liegende, gelaserte Furchen (Vertiefungen) als Fließkanäle für das Lot ausgebildet werden, die zu einer besseren Verteilung des Lotes in den Rillen 15 führen. Über diese querangeordneten Furchen können auch die Prozessgase nach Außen entweichen.

Der Komponentenstapel 1 wird nun derart gebildet, dass die Hartlotteile 6 auf den Stegen 16 bzw. auf den Wulsten 17 der Einzelkomponenten 2 liegen, so dass eine Kontaktierung nur im Bereich der Hartlotteile 6 und der Stege 16 erfolgt. Somit entsteht nur dort Schmelzwärme.

Nach dem Lötvorgang liegen beide Einzelkomponenten 2 gemäß Figur 7 spaltfrei aufeinander. In den Rillen 15 hat sich die Interfacezone 13 zwischen Lot und Basismaterial gebildet. Die seitlichen lotfreien Toleranzräume 14 dienen zum Volumenausgleich des Lotes. Die gesamte Oberfläche im Bereich der Rillen 15 und der Stege 16 wird benetzt.

Eine rillenartige Gravur anstelle eines Grabens 11 bietet den Vorteil, dass die benetzbare Oberfläche des Basismaterials vergrößert wird. Es sind verschiedene Ausführungsformen möglich. Die Stege 16 sind gegenüberliegend platziert oder der Steg 16 der einen Einzelkomponente 2 befindet sich in dem Bereich der Rillen 15 der anderen Einzelkomponente 2. Im Gegensatz zu den herkömmlichen Brazinganlagen wird hier die Kontaktierfläche durch das Steg/Rillen-Design sehr genau festgelegt.

In den Figuren 8 und 9 ist nun ein Rillendesign mit gegenüberliegenden Stegen 16 dargestellt. Den Zustand vor dem Löten zeigt Figur 8, bei der zwischen den Einzelkomponenten 2 auf den Stegen 16 die zu schmelzenden Hartlotteile 6 angeordnet sind. Nach dem bereits beschriebenen Schmelzvorgang stellt sich der in Figur 9 gezeigte Zustand ein, bei dem sich in den Rillen 15 die Interfacezone 13 zwischen Lot und Basismaterial gebildet hat, wobei seitlich die Toleranzräume 14 freigeblieben sind.

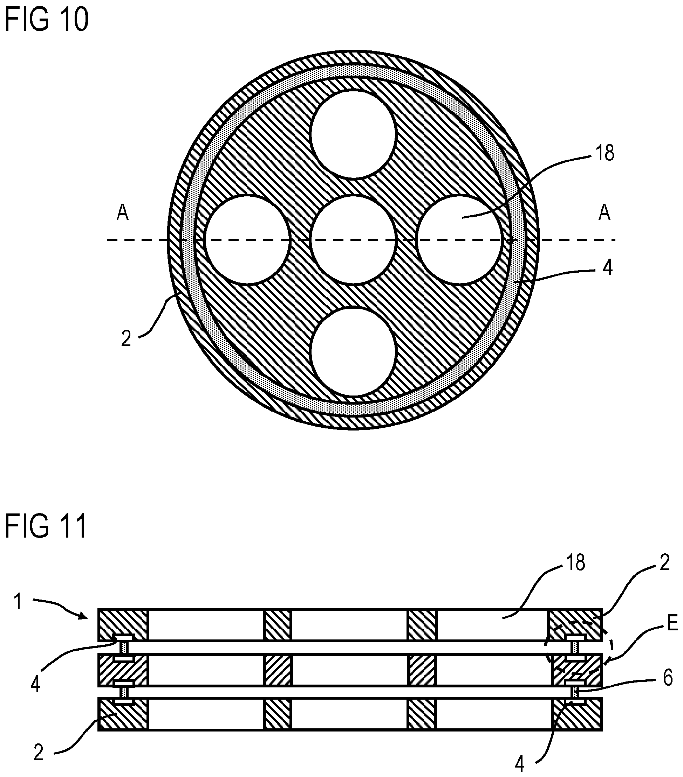

In der Figuren 10 und 11 ist ein Komponentenstapel 1 mit runden Einzelkomponenten 2 dargestellt, bei denen eine axiale Laserbearbeitung erfolgt. Der Verlauf der Lötzone 4 ist hier koaxial angelegt. Die Anzahl und die Breite der Rillen sind durch das Gesamtdesign vorgegeben. Die gesamte Lötzone 4 bestimmt die Haltbar- und Festigkeit der Lötverbindung. Die Figur 11 zeigt einen Querschnitt durch den Komponentenstapel 1 gemäß Linie AA.

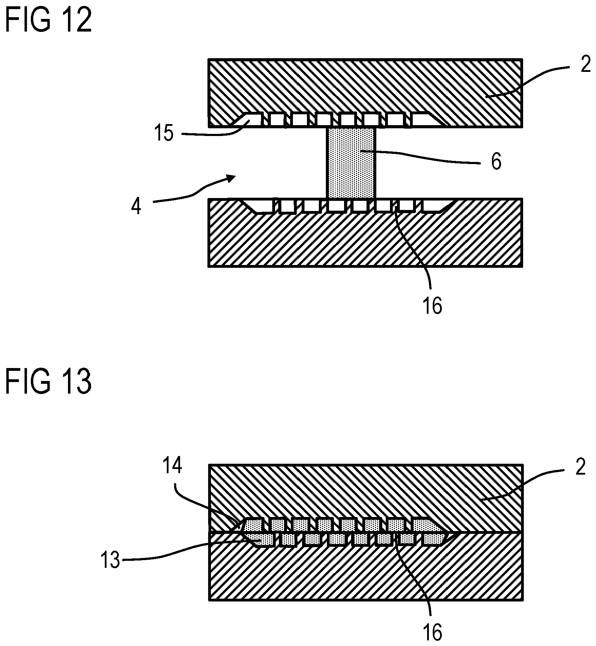

Die scheibenförmigen Einzelkomponenten 2 sind mit runden Bohrungen 18 versehen. Die Lötzone 4 ist kreisringförmig ausgebildet und in geringem Abstand zum Scheibenrand angeordnet. Der Komponentenstapel 1 besteht in diesem Falle aus drei Einzelkomponenten 2, die durch die auf den Lötzonen 4 aufliegenden Hartlotteile 6 getrennt sind. Als Einzelheit E ist die Lötzone 4 vor dem Löten in Figur 12 dargestellt. Hier wird ersichtlich, dass die Hartlotteile 6 auf den Stegen 16 aufliegen. Die Figur 13 zeigt nun dieselbe Stelle nach dem Lötvorgang, wobei die Einzelkomponenten 2 spaltfrei sich berühren. Die Rillen 15 sind bis auf die Toleranzräume 14 in der Interfacezone 13 mit Lot ausgefüllt.

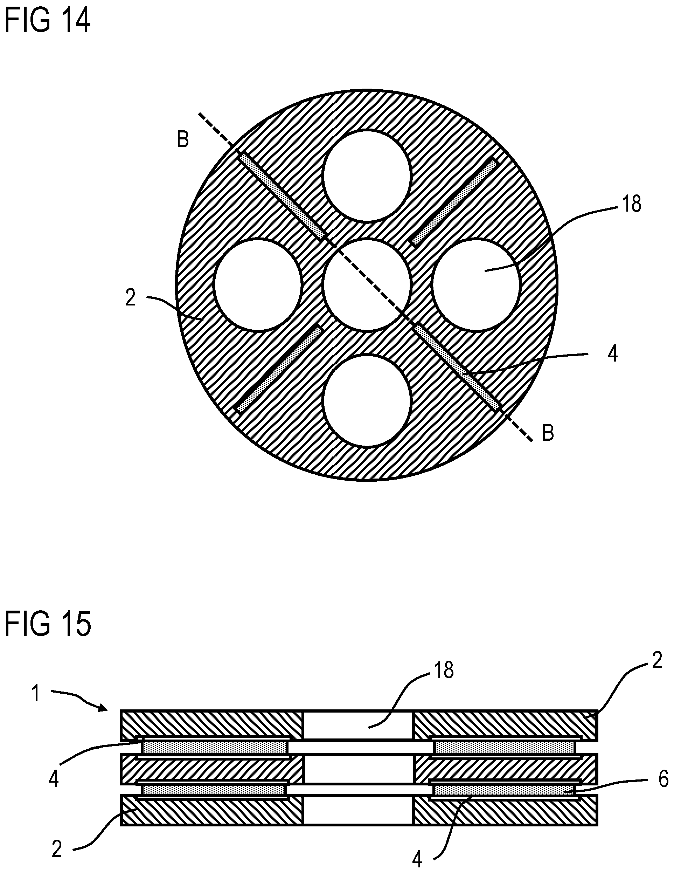

Die Figuren 14 und 15 zeigen einen Komponentenstapel 1, dessen Verlauf der Lötzone 4 radial angelegt ist. Auch hier sind die Anzahl und die Breite der Lötzonen 4 und damit der Gravurzonen durch das Gesamtdesign vorgegeben.

Die ebenfalls mit Bohrungen 18 versehenen Einzelkomponenten 2 haben zwischen den Bohrungen 18 angeordnete, radial nach außen weisende Lötzonen 4. Die Figur 15 zeigt den Komponentenstapel 1 im Querschnitt entlang der Linie BB. Der Komponentenstapel 1 besteht ebenfalls aus drei Einzelkomponenten 2, die durch die auf den Stegen 16 der Lötzonen 4 aufliegenden Hartlotteile 6 getrennt sind. Die Einzelheiten entsprechen denen anhand der Figuren 12 und 13 beschriebenen Ausbildungen.

Aus diesen Grundfiguren können beliebige Varianten abgeleitet werden. Die Ausrichtung und Fixierung der Einzelkomponenten 2 kann in axialer, radialer und rotatorischer Richtung erfolgen

Für die Erzielung der geforderten Festigkeit ist die Lötfläche bestimmend. Für die Erwärmung der Einzelkomponente 2 ist das Verhältnis der Leitungsquerschnitte Einzelkomponente 2 zu Hartlotteil 6 wichtig.

Zusammenfassend ist festzustellen, dass das oben beschriebene erfindungsgemäße Verfahren eine kraftschlüssige, spaltfreie, eng tolerierte Verbindung von Einzelkomponenten ermöglicht, bei der die Breite der Gräben, Stege und Rillen die Kontaktierzone und damit die Haltbarkeit und Festigkeit der Lötverbindung festlegen.

Auch bei einem Verbinden von Einzelkomponenten durch andere Verbindungstechniken z.B. durch Weichlöten oder auch durch Kleben können die Vertiefungen zur Aufnahme des Weichlots bzw. der Klebemittel dienen so dass auch mit diesen Verbindungstechniken ein spaltfreies Verbinden von Einzelkomponenten möglich wird.

Bezugszeichenliste

1    Komponentenstapel
2    Einzelkomponenten
3    Oberflächenschichten
4    Lötzonen

5 Vertiefungen
6 Hartlotteil
7 Elektroden
8 Anpressdruck
9 Energiequelle
10 Strompfade
11 Graben
12 Schräge
13 Interfacezone zwischen Lot und Basismaterial
14 Toleranzraum
15 Rillen
16 Stege
17 Wülste
18 Löcher

**Patentansprüche**

1. Verfahren zur Herstellung einer spaltfreien und kraftschlüssigen Verbindung zwischen mindestens drei metallischen Einzelkomponenten (2) mit folgenden Schritten:

   S1 Erzeugen von Vertiefungen (5) im Bereich von Lötzonen (4) wenigstens einer Einzelkomponente (2)
   S2 Aufbringen mindestens eines Hartlotteiles (6) in den Vertiefungen (5) mindestens einer der zur Lötverbindung gehörenden Einzelkomponenten (2),
   S3 Fixierung der zu verbindenden Einzelkomponenten (2),
   S4 Anlegen von Elektroden (7) an den Komponentenstapel mit einem in seiner Größe einstellbaren Anpressdruck (8),
   S5 Beaufschlagen der Elektroden (7) mit elektrischer Energie zum Überführen der Hartlotteile (6) unter Anpressdruck (8) durch elektrische Widerstandserwärmung mittels der Elektroden (7) in einen schmelzflüssigen Zustand,
   S6 Nachführen der Elektroden durch Druckbeaufschlagung bis die mindestens drei Einzelkomponenten die vorgegebene Verbindung aufweisen,
   S7 Unterbrechen der Energie zwischen den beiden Elektroden (7),
   S8 Abkühlung und Aushärtung der gebildeten Lotteile und
   S9 Druckentlastung der Elektroden (7),
   **dadurch gekennzeichnet,**
   **dass** das Erzeugen von Vertiefungen (5) im Bereich von Lötzonen (4) wenigstens einer Einzelkomponente (2) gemäß Schritt S1 durch einen Abtragungsvorgang erfolgt,
   **dass** vor Schritt S2 eine Bearbeitung der Oberfläche der Einzelkomponenten (2) zumindest im Bereich der herzustellenden Lötverbindungen in den Lötzonen (4) zum Entfernen basismaterialfremder Oberflächenschichten (3) erfolgt, und
   **dass** bei Schritt S2 zur Bildung eines Toleranzraumes (14) das Volumen des Hartlotteiles (6) bzw. die Summe der Volumina der Hartlötteile kleiner als die Summe der Volumina der Vertiefungen (5) einer Lötverbindung ist und dass das mindestens eine Hartlotteil (6) in den Vertiefungen (5) so angeordnet wird, dass das mindestens eine Hartlotteil (6) die Einzelkomponenten (2) auf Abstand hält.

2. Verfahren nach Anspruch 1,
   **dadurch gekennzeichnet,**
   **dass** die Bearbeitung der Lötzonen (4) gemäß Schritt S1 und/oder die Bearbeitung der Oberfläche der Einzelkomponenten (2) mittels eines Lasers erfolgt.

3. Verfahren nach Anspruch 1,
   **dadurch gekennzeichnet,**
   **dass** die Bearbeitung der Lötzonen (4) gemäß Schritt S1 und/oder die Bearbeitung der Oberfläche der Einzelkomponenten (2) mittels einer mechanischen Vorrichtung erfolgt oder durch selektives galvanisches Ätzen.

4. Verfahren nach Anspruch 3,
   **dadurch gekennzeichnet,**
   **dass** beim mechanischen Abtragen oder beim galvanischen Ätzen auf die abgetragene Fläche eine dünne Schicht eines lötfähigen Materials aufgetragen wird, so dass anschließend darauf optimal gelötet werden kann.

5. Verfahren nach einem der Ansprüche 1 bis 4,
   **dadurch gekennzeichnet,**
   **dass** die Bearbeitung der Lötzonen (4) gemäß Schritt S1 und/oder die Bearbeitung der Oberfläche der Einzelkomponenten (2) einseitig oder beidseitig erfolgt.

6. Verfahren nach einem der Ansprüche 1 bis 5,
   **dadurch gekennzeichnet,**
   **dass** die Erzeugung von Vertiefungen (5) im Bereich der Lötzonen (4) gemäß Schritt S1 im Grabendesign und/oder Rillendesign erfolgt.

7. Verfahren nach Anspruch 6,
   **dadurch gekennzeichnet,**
   **dass** die Vertiefungen (5) im Rillendesign Rillen (15) und Stege (16) aufweisen, die gegenüberliegend ggf. versetzt angeordnet sind.

8. Verfahren nach Anspruch 6 oder 7,
   **dadurch gekennzeichnet,**
   **dass** die Vertiefungen (5) im Rillendesign Rillen (15) und Stege (16) unterschiedlicher Breite und/oder Tiefe aufweisen.

9. Verfahren nach einem der Ansprüche 1 bis 8,
   **dadurch gekennzeichnet,**
   **dass** das Aufbringen des Hartlotteiles (6) gemäß Schritt S2 mittels Siebdruckes, Schablonendruckes oder Dispensers oder als Formteil erfolgt.

10. Verfahren nach einem der Ansprüche, 8 oder 9, wenn Anspruch 9 von einem der Ansprüche 7 oder 8 abhängig ist,
    **dadurch gekennzeichnet,**
    **dass** auf den Stegen (16) querverlaufende gelaserte Furchen zur besseren Schmelzeverteilung vorgesehen sind.

11. Verfahren nach einem der Ansprüche 1 bis 10,
    **dadurch gekennzeichnet,**
    **dass** Flächenverhältnis zwischen Einzelkomponenten (2) und Hartlotteil (6) derart gewählt wird, dass beim Hartlöten die Temperatur des Basismaterial der Einzelkomponenten (2) unter der für die Applikation kritischen Schwelle bleibt.

12. Verfahren nach einem der Ansprüche 1 bis 11,
    **dadurch gekennzeichnet,**
    **dass** die Vertiefungen (5) axial, konzentrisch und/oder radial angeordnet sind.

13. Verfahren nach einem der Ansprüche 1 bis 11,
    **dadurch gekennzeichnet,**
    **dass** ein Festlegen des Hartlotteils (6) in der Vertiefung (5) im Schritt **S2** durch Quetschungen des Lotüberstandes in seitliche Überlaufkanäle erfolgt.

**Claims**

1. A method for producing a gap-free and non-positive connection between at least three metallic individual components (2), having the following steps:

   S1    creating depressions (5) in the region of soldering zones (4) of at least one individual component (2),
   S2    applying at least one hard solder part (6) in the depressions (5) of at least one of the individual components (2) forming part of the soldered connection,
   S3    fixing the individual components (2) to be connected,
   S4    applying electrodes (7) to the component stack with an adjustable contact pressure (8),

(fortgesetzt)

S5    applying electrical energy to the electrodes (7) for transferring the hard solder parts (6) into a molten state under contact pressure (8) by electrical resistance heating by means of the electrodes (7),

S6    adjusting the electrodes by applying pressure until the at least three individual components have the predetermined connection,

S7    interrupting the energy between the two electrodes (7),

S8    cooling and hardening the solder parts formed and

S9    relieving pressure from the electrodes (7),

**characterized**

**in that** depressions (5) are created in the region of soldering zones (4) of at least one individual component (2) according to step S1 by an ablation process,

**in that** before step S2 the surface of the individual components (2) is treated at least in the region of the soldered connections to be produced in the soldering zones (4) for the removal of surface layers (3) which are different from the base material, and

**in that** during step S2, for forming a tolerance space (14), the volume of the hard solder part (6) or the sum of the volumes of the hard solder parts is less than the sum of the volumes of the depressions (5) of a soldered connection and in that the at least one hard solder part (6) is arranged in the depressions (5) such that the at least one hard solder part (6) holds the individual components (2) at a distance.

2.    The method according to Claim 1, **characterized in that** the treatment of the soldering zones (4) according to step S1 and/or the treatment of the surface of the individual components (2) is carried out by means of a laser.

3.    The method according to Claim 1, **characterized in that** the treatment of the soldering zones (4) according to step S1 and/or the treatment of the surface of the individual components (2) is carried out by means of a mechanical device or by selective galvanic etching.

4.    The method according to Claim 3, **characterized in that**, during the mechanical ablation or during the galvanic etching, a thin layer of a solderable material is applied to the ablated surface so that it can be subsequently soldered in an optimal manner.

5.    The method according to one of Claims 1 to 4, **characterized in that** the treatment of the soldering zones (4) according to step S1 and/or the treatment of the surface of the individual components (2) is carried out on one side or on both sides.

6.    The method according to one of Claims 1 to 5, **characterized in that** depressions (5) are created in the region of the soldering zones (4) according to step S1 in a trench design and/or groove design.

7.    The method according to Claim 6, **characterized in that** in the groove design the depressions (5) have grooves (15) and webs (16) which are arranged opposingly or optionally offset.

8.    The method according to Claim 6 or 7, **characterized in that** in the groove design the depressions (5) have grooves (15) and webs (16) of a different width and/or depth.

9.    The method according to one of Claims 1 to 8, **characterized in that** the application of the hard solder part (6) according to step S2 is carried out by means of screen printing, stencil printing or a dispenser or as a moulded part.

10.   The method according to one of Claims 7, 8 or 9, when Claim 9 is dependent on one of Claims 7 or 8, **characterized in that** transversely running laser-cut furrows are provided on the webs (16) for improved melt distribution.

11.   The method according to one of Claims 1 to 10, **characterized in that** the surface ratio between the individual components (2) and the hard solder part (6) is selected such that during brazing the temperature of the base material of the individual components (2) remains below the critical threshold for the application.

12.   The method according to one of Claims 1 to 11, **characterized in that** the depressions (5) are arranged axially, concentrically and/or radially.

**13.** The method according to one of Claims 1 to 11, **characterized in that** the hard solder part (6) is fixed in the depression (5) in step S2 by squeezing the excess solder into lateral overflow channels.

**Revendications**

**1.** Procédé de réalisation d'une liaison sans jeu et par ajustement serré entre au moins trois composants métalliques (2), comprenant les étapes suivantes :

S1 Création d'évidements (5) dans la région de zones de brasage (4) d'au moins un composant individuel (2),

S2 Application d'au moins un élément de brasage (6) dans les évidements (5) d'au moins un des composants (2) appartenant au joint brasé,

S3 Fixation des composants (2) à assembler,

S4 Application d'électrodes (7) sur la pile de composants avec une pression de contact réglable (8),

S5 Application d'énergie électrique aux électrodes (7) pour amener les éléments de brasage (6) sous pression de contact (8) à l'état fondu par chauffage par résistance électrique au moyen des électrodes (7),

S6 Avancement des électrodes par application d'une pression jusqu'à ce que les au moins trois composants présentent la liaison spécifiée,

S7 Interruption de l'énergie entre les deux électrodes (7),

S8 Refroidissement et durcissement des pièces de soudure formées et

S9 Décompression des électrodes (7),

**caractérisé en ce que** la création d'évidements (5) au niveau des zones de brasage (4) d'au moins un composants individuels (2) est réalisée à l'étape S1 par un procédé d'enlèvement de matière, qu'avant l'étape S2, la couche superficielle des composants (2) est traitée, au moins dans la zone des joints de soudure à réaliser dans les zones de brasage (4), afin d'éliminer les couches superficielles (3) étrangères au matériau de base, et qu'à l'étape S2, pour former un espace de tolérance (14), le volume de l'élément de brasage(6) ou la somme des volumes des pièces brasées est inférieur à la somme des volumes des évidements (5) d'un joint brasé et qu'au moins un élément de brasage (6) est disposé dans les évidements (5) de sorte qu'au moins un élément de brasage (6) maintienne une distance entre les composants individuels (2).

**2.** Procédé selon la revendication 1,
**caractérisé en ce que**
l'usinage des zones de brasage (4) est effectué à l'étape S1 et/ou l'usinage de la surface des composants individuels (2) est effectué au moyen d'un laser.

**3.** Procédé selon la revendication 1,
dans lequel l'usinage des zones de brasage (4) à l'étape S1 et/ou l'usinage de la couche superficielle des composants individuels (2) est effectué au moyen d'un dispositif mécanique ou par électrodéposition sélective.

**4.** Procédé selon la revendication 3,
dans lequel, lors de l'enlèvement mécanique ou de l'électrodéposition, une fine couche de matériau brasable est appliquée sur la surface enlevée, afin d'optimiser le brasage ultérieur.

**5.** Procédé selon une quelconque des revendications 1 à 4,
**caractérisé en ce que** l'usinage des zones de brasage (4) selon l'étape S1 et/ou l'usinage de la surface des composants individuels (2) est effectué sur une face ou deux faces.

**6.** Procédé selon une quelconque des revendications 1 à 5,
**caractérisé en ce que** la création des évidements (5) au niveau des zones de brasage (4) selon l'étape S1 est réalisée selon une conception en tranchée et/ou en rainure.

**7.** Procédé selon la revendication 6,
dans lequel les évidements (5) de la conception en rainure présentent des rainures (15) et des nervures (16) disposées face à face, éventuellement décalées.

8. Procédé selon la revendication 6 ou 7,
   **caractérisé en ce que** les évidements (5) de la conception en rainure présentent des rainures (15) et des nervures (16) de largeurs et/ou de profondeurs différentes.

9. Procédé selon une quelconque des revendications 1 à 8, dans lequel l'application de l'élément brasé (6) est réalisée à l'étape S2 par sérigraphie, impression au pochoir, application par distributeur ou par moulage.

10. Procédé selon une quelconque des revendications 7, 8 ou 9, la revendication 9 dépendant d'une quelconque des revendications 7 ou 8,
    **caractérisé en ce que** des sillons découpés au laser sont réalisées sur les nervures (16) pour une meilleure répartition du métal fondu.

11. Procédé selon une quelconque des revendications 1 à 10,
    **caractérisé en ce que** le rapport de surface entre les composants individuels (2) et la partie brasée (6) est sélectionné de sorte que, pendant le brasage, la température du matériau de base des composants individuels (2) reste inférieure au seuil critique pour l'application.

12. Procédé selon une quelconque des revendications 1 à 11,
    **caractérisé en ce que** les cavités (5) soient disposées axialement, concentriquement et/ou radialement.

13. Procédé selon une des revendications 1 à 11,
    dans lequel l'élément de brasage (6) est fixé dans la cavité (5) à l'étape S2 par transvasement du surplus de brasage dans des canaux de trop-plein latéraux.

FIG 1

FIG 2

FIG 3

FIG 4

FIG 5

FIG 6

FIG 7

FIG 8

FIG 9

FIG 10

FIG 11

FIG 12

FIG 13

FIG 14

FIG 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19512089 C1
- US 20190363313 A1
- DD 274775 A1
- DE 3107665 A1